(19) Europäisches Patentamt
European Patent Office
Office européen des brevets

(11) **EP 1 255 378 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(51) Int Cl.:
**H04L 12/56** (2006.01)

(21) Anmeldenummer: **01110855.2**

(22) Anmeldetag: **04.05.2001**

(54) **Kapazitätsadäquates Setzen der Fenstergrösse bei I/O Uberlast**

Capacity dependent adjusting of the window size during I/O overloading

Adaptation de la taille de la fenêtre en fonction de la capacité en cas de surcharge I/O

(84) Benannte Vertragsstaaten:
**DE FR GB IT**

(43) Veröffentlichungstag der Anmeldung:
**06.11.2002 Patentblatt 2002/45**

(73) Patentinhaber: **Nokia Siemens Networks GmbH & Co. KG**
**81541 München (DE)**

(72) Erfinder:
• **Müller, Erasmus**
**80809 München (DE)**
• **Ross, Christopher, Dr.**
**81675 München (DE)**
• **Tuexen, Michael, Dr.**
**81479 München (DE)**

(56) Entgegenhaltungen:
**US-A- 6 105 064**

• **VERNON ET AL: "Congestion control strategies for mixed X.25/frame relay networks" COMMUNICATIONS, 1994. ICC '94, SUPERCOMM/ICC '94, CONFERENCE RECORD, 'SERVING HUMANITY THROUGH COMMUNICATIONS.' IEEE INTERNATIONAL CONFERENCE ON NEW ORLEANS, LA, USA 1-5 MAY 1994, NEW YORK, NY, USA,IEEE, 1. Mai 1994 (1994-05-01), Seiten 1621-1628, XP010126612 ISBN: 0-7803-1825-0**
• **ROSE O: "THE Q-BIT SCHEME - CONGESTION AVOIDANCE USING RATE-ADAPTION -" COMPUTER COMMUNICATIONS REVIEW, ASSOCIATION FOR COMPUTING MACHINERY. NEW YORK, US, Bd. 22, Nr. 2, 1. April 1992 (1992-04-01), Seiten 29-42, XP000271276 ISSN: 0146-4833**

**Beschreibung**

Betrachtet wird ein System bestehend aus einem mit Software ladbaren Prozessor. Daran angeschlossen ist ein Ein/Ausgabebaustein (I/O Baustein), dessen Funktionen direkt in Hardware realisiert sind. An den I/O Baustein angeschlossen sind viele Nachrichtenkanäle, deren Nachrichtenaufkommen schwankt und unbekannt ist. Der I/O Baustein bearbeitet den Nachrichtenstrom zusammenfassend für alle Nachrichtenkanäle, der Prozessor bearbeitet die Nachrichten für jeden Nachrichtenkanal gesondert. Zur gesicherten Nachrichtenübertragung kommt ein Protokoll zum Einsatz, das einen Fenstermechanismus zur Regulierung der Anzahl der Nachrichten, die eine Verkehrsquelle unquittiert verschicken darf, aufweist.

In einem solchen I/O Baustein kann eine Empfangsüberlast eintreten, wenn das Nachrichtenangebot der Nachrichtenkanäle die Kapazität des I/O Bausteins übersteigt. In diesem Fall werden Nachrichten verworfen.

Im normalen Betrieb, d.h. wenn keine Überlastsituation besteht, wird die Fenstergröße für jeden Nachrichtenkanal viel größer gewählt als die Fenstergröße, welche die angeschlossene Verkehrsquelle beschränken würde.

Ein Problem besteht darin, bei eintretender Überlast möglichst verzögerungsfrei einen geeigneten Wert für die Fenstergröße für jeden Nachrichtenkanal zu finden. Diese Fenstergrößen sollen so bemessen sein, dass die ganze Kapazität des I/O Bausteins verwendet wird. Weiterhin sollen im normalen Betrieb keine Messungen des Nachrichtenaufkommens auf den angeschlossenen Nachrichtenkanälen durchgeführt werden, um den durch Managementfunktionen verursachten Overhead gering zu halten.

Eine bekannte Lösung reduziert die Fenstergröße bei Überlast schrittweise, beispielsweise um jeweils 20 Prozent. Dies hat den Nachteil, dass die ursprünglich viel größer gewählte Fenstergröße erst auf jenen Wert reduziert werden muss, der die betreffende Verkehrsquelle einschränkt. Dafür sind viele Schritte nötig, wodurch die Anpassung erst mit Verzögerung wirksam wird. Ein solches System ist bekannt, zum Beispiel, aus Dokument US 6 105 064 A (Hundley B. Gregory et AL), 15.08.2000.

Eine andere bekannte Lösung verwendet statistische Daten über das Nachrichtenaufkommen im Hochlastfall. Dieses Verfahren ist allerdings nicht anwendbar, wenn das Nachrichtenaufkommen stark schwankt und einzelne Nachrichtenkanäle inaktiv sein können.

Eine weitere bekannte Lösung verwendet den sogenannten Slow Start Algorithmus. Dieser bietet lediglich eine Approximation an die optimale Fenstergröße, außerdem wird das Fenster bei diesem Verfahren von der Verkehrsquelle aufgrund dort vorhandener Informationen berechnet.

Die der vorliegenden Erfindung zugrundeliegende Aufgabe besteht darin, die Effizienz der bisher bekannten Verfahren zum Setzen der Fenstergröße bei I/O Überlast zu verbessern.

Die Aufgabe wird ausgehend von den Verfahren zum Setzen der Fenstergröße bei I/O Überlast gemäß den Merkmalen des Oberbegriffs des Patentanspruchs 1 durch dessen kennzeichnende Merkmale gelöst.

Ein wesentlicher Aspekt des erfindungsgemäßen Verfahrens ist die Tatsache, dass die Anzahl der Nachrichten, die vom I/O Baustein zum Prozessor weitergeleitet werden, eine geeignete Indikation seiner aktuellen Leistungsfähigkeit ist. Bezieht man diese Nachrichtenzahl auf die einzelnen Nachrichtenkanäle, ergibt sich für jeden Nachrichtenkanal gesondert die optimale Fenstergröße. Der Vorteil dabei ist, dass einerseits Überlastsituationen verhindert werden können und andererseits das Nachrichtenaufkommen der einzelnen Nachrichtenkanäle bei der Ermittlung der Fenstergröße berücksichtigt wird. Das erfindungsgemäße Verfahren ist besonders vorteilhaft bei mehreren angeschlossenen Nachrichtenkanälen anwendbar.

Weitere vorteilhafte Ausgestaltungen der Erfindung sind den Unteransprüchen zu entnehmen.

Im folgenden wird das erfindungsgemäße Verfahren anhand einer Zeichnung näher erläutert.

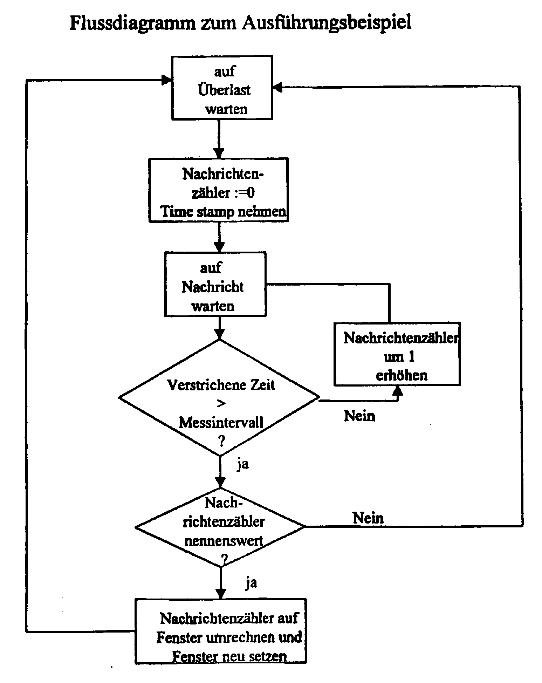

Die Figur zeigt ein Ablaufschema eines erfindungsgemäßen Verfahrens. Als Ausführungsbeispiel wird ein Knoten in einem Kommunikationsnetz betrachtet, an den Nachrichtenkanäle angeschlossen sind, auf denen SSCOP (Service Specific Connection Oriented Protocol) mit SSCF UNI (Service Specific Coordination Function for the User-Network Interface) als gesichertes Übertragungsprotokoll verwendet wird. Das Fenster, das der Verkehrsquelle vom Empfänger eingeräumt wird, wird in einer STAT Nachricht (status message) oder einer USTAT Nachricht (unsolicited status message) zusammen mit weiteren Statusinformationen an die Verkehrsquelle übertragen. Eine STAT Nachricht ist die Antwort des Empfängers auf eine POLL Nachricht (polling message) der Verkehrsquelle, in welcher von der Verkehrsquelle unter anderem ein aktuelles Fenster angefordert wird. Durch dieses Fenster wird die Anzahl der Nachrichten geregelt, die von der Verkehrsquelle zwischen zwei POLL Nachrichten versendet werden dürfen. Der zeitliche Abstand zweier POLL Nachrichten beträgt im Ausführungsbeispiel $t_{poll}$=750ms.

Bei einsetzender Überlast wird ein Zeitstempel erzeugt. Auf dem Nachrichtenkanal empfangene Nachrichten werden gezählt, bis nach Ablauf eines geeignet gewählten Meßintervalles $\Delta t$ - es wurde $\Delta t$=375ms gewählt - das Zählen beendet wird. Dann wird die neue Fenstergröße gemäß folgender Formel berechnet:

$$\text{Fenstergröße} = N \cdot \frac{t_{poll}}{\Delta t}$$

Darin bedeuten: $\Delta t$ ist die Dauer des Meßintervalles, N ist die Anzahl der während des Meßintervalls $\Delta t$ empfangenen Nachrichten, $t_{poll}$ ist der zeitliche Abstand zweier POLL Nachrichten von der Verkehrsquelle zum Empfänger.

Nicht für jeden Nachrichtenkanal wird diese Messung durchgeführt, sondern nur für Nachrichtenkanäle, deren Nachrichtenaufkommen einen bestimmten Wert überschreitet. Damit wird vermieden, dass Rechenleistung für Nachrichtenkanäle aufgewendet wird, die wenig oder nichts zur Überlast beitragen. Außerdem wird verhindert, dass für inaktive Nachrichtenkanäle eine Fenstergröße von rechnerisch Null gesetzt wird, da dadurch ein inaktiver Nachrichtenkanal die Sendeberechtigung verliert.

**Patentansprüche**

1. Verfahren zur Überlastabwehr, das in der Empfangseinrichtung eines Kommunikationssystems abläuft, die mindestens eine erste Komponente und eine zweite Komponente aufweist und an die mindestens ein Nachrichtenkanal angeschlossen ist,

   - demgemäss Nachrichten, die von der ersten Komponente empfangen werden, von der zweiten Komponente vorverarbeitet werden,
   - demgemäss ein Fenstermechanismus zur Beeinflussung der Anzahl der Nachrichten, die eine angeschlossene Nachrichtenquelle unquittiert verschicken darf, verwendet wird, **dadurch gekennzeichnet,**
   - **dass** die Überlastabwehr durch Beeinflussung der Fenstergröße durch die zweite Komponente der Empfangseinrichtung in Abhängigkeit der Überlastinformationen der ersten Komponente vorgenommen wird,
   - **dass** zur Ermittlung der neuen Fenstergröße die Anzahl der im Überlastfall von der ersten zur zweiten Komponente noch weitergeleiteten Nachrichten verwendet wird.

2. Verfahren nach Anspruch 1, **dadurch gekennzeichnet, dass** die beschränkende Kapazität der ersten Komponente auf mehrere Nachrichtenkanäle gemäß deren Anforderungen kanalspezifisch derart verteilt wird, dass Nachrichtenkanälen mit einem hohen Nachrichtenaufkommen mehr Kapazität zugeordnet wird als Nachrichtenkanälen mit einem geringeren Nachrichtenaufkommen.

3. Verfahren nach einem der Ansprüche 1 bis 2, **dadurch gekennzeichnet, dass** ein Messvorgang zur Bestimmung der neuen Fenstergröße erst nach Eintreten des Überlastfalls gestartet wird.

4. Verfahren nach einem der Ansprüche 1 bis 3, **dadurch gekennzeichnet, dass** für inaktive Nachrichtenkanäle und für Nachrichtenkanäle mit einem Nachrichtenaufkommen unterhalb eines geeignet zu wählenden Wertes keine Messung durchgeführt und auch keine neue Fenstergröße ermittelt wird.

5. Anordnung zur Überlastabwehr, die Teil der Empfangseinrichtung eines Kommunikationssystems ist, die mindestens eine erste Komponente und eine zweite Komponente aufweist und an die mindestens ein Nachrichtenkanal angeschlossen ist,

   - deren erste Komponente Nachrichten empfängt, die die zweite Komponente vorverarbeitet,
   - die einen Fenstermechanismus zur Beeinflussung der Anzahl der Nachrichten, die eine angeschlossene Nachrichtenquelle unquittiert verschicken darf, verwendet, **dadurch gekennzeichnet,**
   - **dass** die zweite Komponente der Anordnung die Überlastabwehr durch Beeinflussung der Fenstergröße in Abhängigkeit der Überlastinformationen der ersten Komponente vornimmt,
   - **dass** die Anordnung zur Ermittlung der neuen Fenstergröße die Anzahl der im Überlastfall von der ersten zur zweiten Komponente noch weitergeleiteten Nachrichten verwendet.

6. Anordnung nach Anspruch 5, **dadurch gekennzeichnet, dass** die Anordnung die beschränkende Kapazität der ersten Komponente auf mehrere Nachrichtenkanäle gemäß deren Anforderungen kanalspezifisch derart verteilt, dass Nachrichtenkanälen mit einem hohen Nachrichtenaufkommen mehr Kapazität zugeordnet wird als Nachrichtenkanälen mit einem geringeren Nachrichtenaufkommen.

7. Anordnung nach einem der Ansprüche 5 bis 6, **dadurch gekennzeichnet, dass** die Anordnung einen Messvorgang zur Bestimmung der neuen Fenstergröße erst nach Eintreten des Überlastfalls startet. Anordnung nach einem der Ansprüche 5 bis 7, **dadurch gekennzeichnet, dass** die Anordnung für inaktive Nachrichtenkanäle und für Nachrichtenkanäle mit einem Nachrichtenaufkommen unterhalb eines geeignet zu wählenden Wertes keine Messung durchführt und auch keine neue Fenstergröße ermittelt.

**Claims**

1.  Method for overload control which runs in the receiving arrangement of a communication system, which receiving arrangement has at least one first component and one second component and to which at least one message channel is connected

    - according to which messages which are received by the first component are preprocessed by the second component,
    - according to which a window mechanism is used for influencing the number of messages which a connected message source is allowed to send out unacknowledged, **characterized**
    - **in that** the overload control is performed by influencing the window size by means of the second component of the receiving arrangement in dependence on the overload information of the first component,
    - **in that**, for determining the new window size, the number of messages still forwarded from the first to the second component in the overload case is used.

2.  Method according to Claim 1, **characterized in that** the limiting capacity of the first component is distributed channel-specifically over a number of message channels in accordance with their requirements in such a manner that message channels with a high volume of messages are allocated more capacity than message channels having a lower volume of messages.

3.  Method according to one of Claims 1 to 2, **characterized in that** a measuring process for determining the new window size is only started after the overload case occurs.

4.  Method according to one of Claims 1 to 3, **characterized in that**, for inactive message channels and for message channels having a volume of messages below a value to be selected suitably, no measurement is performed and no new window size is determined, either.

5.  Arrangement for overload control which is part of the receiving arrangement of a communication system, which receiving arrangement has at least one first component and one second component and to which at least one message channel is connected,

    - the first component of which receives messages which are preprocessed by the second component,
    - which uses a window mechanism for influencing the number of messages which a connected message source is allowed to send out unacknowledged, **characterized**
    - **in that** the second component of the arrangement performs the overload control by influencing the window size in dependence on the overload information of the first component,
    - **in that** the arrangement uses the number of messages still forwarded from the first to the second component in the overload case for determining the new window size.

6.  Arrangement according to Claim 5, **characterized in that** the arrangement distributes the limiting capacity of the first component channel-specifically over a number of messages channels in accordance with their requirements in such a manner that message channels with a high volume of messages are allocated more capacity than messages channels having a lower volume of messages.

7.  Arrangement according to one of Claims 5 to 6, **characterized in that** the arrangement starts a measuring process for determining the new window size only after the overload case occurs.
    Arrangement according to one of Claims 5 to 7, **characterized in that** the arrangement does not perform a measurement for inactive message channels and for message channels having a volume of messages below a value to be selected suitably, and does not determine a new window size, either.

**Revendications**

1.  Procédé de protection contre la surcharge, qui se déroule dans le dispositif de réception d'un système de communication présentant au moins un première composante et une deuxième composante, et auquel est raccordé au moins un canal de télécommunication,

    - selon lequel des messages qui sont reçus par la première composante sont traités au préalable par la deuxième composante,
    - selon lequel un mécanisme de fenêtres, destiné à influencer le nombre de messages qu'une source de messages raccordée a le droit d'envoyer sans accusé de réception, est utilisé, **caractérisé en ce**
    - **que** la protection contre la surcharge est exécutée au moyen de l'influence de la taille de fenêtre par la deuxième composante du dispositif de réception en fonction des informations de surcharge de la première composante,
    - en ce que, pour déterminer la nouvelle taille de fenêtre, on utilise le nombre de messages encore acheminés par la première composante vers la deuxième composante en cas de surcharge.

**2.** Procédé selon la revendication 1,
**caractérisé en ce
que** la capacité limitatrice de la première composante est répartie, de manière spécifique au canal, sur plusieurs canaux de messages selon leurs demandes, de telle manière que plus de capacité est affectée aux canaux de messages ayant un trafic de messages élevé qu'aux canaux de messages ayant un trafic de messages moindre.

**3.** Procédé selon l'une quelconque des revendications 1 à 2,
**caractérisé en ce
qu'**une opération de mesure destinée à déterminer la nouvelle taille de fenêtre est démarrée seulement après l'apparition du cas de surcharge.

**4.** Procédé selon l'une quelconque des revendications 1 à 3,
**caractérisé en ce
qu'**aucune mesure n'est réalisée pour des canaux de messages inactifs ni pour des canaux de messages ayant un trafic de messages inférieur à une valeur à sélectionner de manière appropriée et en ce qu'aucune nouvelle taille de fenêtre n'est non plus déterminée.

**5.** Dispositif de protection contre la surcharge faisant partie du dispositif de réception d'un système de communication, qui présente au moins une première composante et une deuxième composante, et auquel est raccordé au moins un canal de télécommunication,

- dont la première composante reçoit des messages que la deuxième composante traite au préalable,
- qui utilise un mécanisme de fenêtres destiné à influencer le nombre de messages qu'une source de messages raccordée a le droit d'envoyer sans accusé de réception,
**caractérisé en ce**
- **que** la deuxième composante du dispositif exécute la protection contre la surcharge en influençant la taille de fenêtre en fonction des informations de surcharge de la première composante,
- en ce que le dispositif pour déterminer la nouvelle taille de fenêtre utilise le nombre de messages encore acheminés par la première composante vers la deuxième composante en cas de surcharge.

**6.** Dispositif selon la revendication 5,

**caractérisé en ce
que** le dispositif répartit, de manière spécifique au canal, la capacité limitatrice de la première composante sur plusieurs canaux de messages selon leurs demandes, de telle manière que plus de capacité est affectée aux canaux de messages ayant un trafic de messages élevé qu'aux canaux de messages ayant un trafic de messages moindre.

**7.** Dispositif selon l'une quelconque des revendications 5 à 6,
**caractérisé en ce
que** le dispositif démarre une opération de mesure destinée à déterminer la nouvelle taille de fenêtre seulement après l'apparition du cas de surcharge.
Dispositif selon l'une quelconque des revendications 5 à 7,
**caractérisé en ce
que** le dispositif ne réalise aucune mesure pour des canaux de messages inactifs ni pour des canaux de messages ayant un trafic de messages inférieur à une valeur à sélectionner de manière appropriée et en ce qu'il ne détermine non plus aucune nouvelle taille de fenêtre.

# Flussdiagramm zum Ausführungsbeispiel

auf
Überlast
warten

Nachrichtenzähler :=0
Time stamp nehmen

auf
Nachricht
warten

Nachrichtenzähler
um 1
erhöhen

Verstrichene Zeit
>
Messintervall
?

Nein

ja

Nachrichtenzähler
nennenswert
?

Nein

ja

Nachrichtenzähler auf
Fenster umrechnen und
Fenster neu setzen

EP 1 255 378 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6105064 A, Hundley B. Gregory